# EUROPEAN PATENT APPLICATION

(11) **EP 1 638 185 A2**
(43) Date of publication of application: **22.03.2006**
(21) Application number: 05016902.8
(22) Date of filing: 03.08.2005
(51) Int. Cl.: H02K 1/14, H02K 15/02

(54) **Stator of motor and method of manufacturing the same**

(30) Priority: 15.09.2004 KR 2004073851
(71) Applicant: LG ELECTRONICS INC., Seoul, 150-010 (KR)
(72) Inventor: Kim, Byung Taek, Ansan-si Kyungki-do 425-020 (KR)
(74) Representative: TER MEER - STEINMEISTER & PARTNER GbR

(57) **Abstract**

A method of manufacturing a stator of a motor comprises the steps of bending at least one end of an electrical steel sheet (200) to prepare a core sheet (50') comprising a yoke part (52') and at least one pole part (54') bent from the yoke part (52'), stacking a plurality of core sheets (50') to prepare a unit core (50) having a predetermined thickness, arranging a plurality of unit cores (50) in line to prepare a core band (210), winding coils (110) on the core band (210), and connecting both ends of the core band (210). In this way, the stator is manufactured. Consequently, no scrap is formed from the electrical steel sheet (200) according to the present invention.

## Description

### BACKGROUND OF THE INVENTION

### Field of the Invention

The present invention relates to a stator of a motor and a method of manufacturing the same, and, more particularly, to a stator of a motor, which has a core assembly comprising a plurality of individual unit cores arranged in the circumferential direction of the stator, each unit core being made of an electrical steel sheet having at least one bent end, and a method of manufacturing the same.

### Description of the Related Art

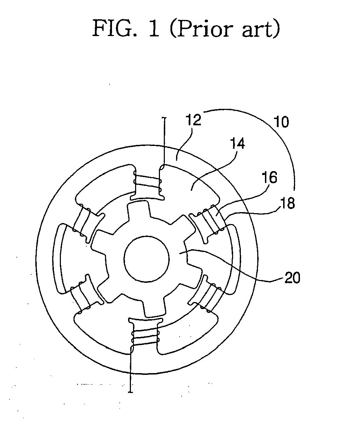

FIG. 1 is a schematic view illustrating the structure of a conventional single-phase switched reluctance motor.

As shown in FIG. 1, the conventional single-phase switched reluctance motor comprises: a stator 10 connected to an external power supply; and a rotor 20 rotatably disposed in the stator 10, the rotor 20 performing rotating movement through electro-magnetic interaction between the rotor 20 and the stator 10 when electric current is supplied to the stator 10 from the external power supply.

The stator 10 comprises: a plurality of ring-shaped yokes 12; a plurality of poles 16 protruded from each of the yokes 12 in the radial direction of the yokes 12 toward the rotor 20, the poles 16 being spaced apart from each other, with slots 14 being formed between the respective poles 16, in the circumferential direction of the yokes 12; and coils 18 wound on the poles 16, respectively, the coils 18 being connected to the external power supply.

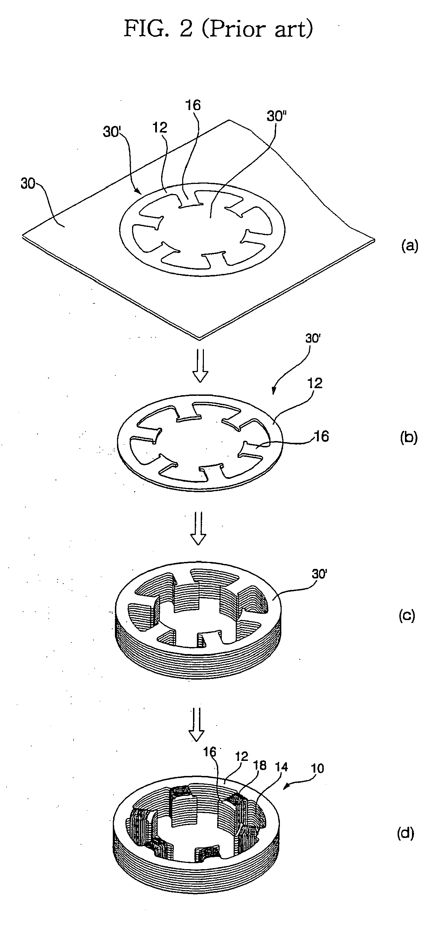

FIG. 2 is a perspective view illustrating a process of manufacturing the stator of the conventional motor shown in FIG. 1.

The stator of the conventional motor is manufactured as follows:

As shown in FIGS. 2A and 2B, a stator sheet 30', having the yoke 12 and the poles 16, is obtained from a thin electrical steel sheet 30 by a stamping process. Preferably, a non-oriented silicon steel sheet with excellent electric flow performance is used as the electrical steel sheet 30. The stamping process is repeatedly performed to obtain a plurality of stator sheets 30'.

After the stator sheets 30' are prepared, the stator sheets 30' are stacked to a predetermined height to form a core, as shown in FIG. 2C. Finally, the coils 18 are wound on the core, as shown in FIG. 2D. In this way, a stator is manufactured.

In the conventional method of manufacturing the stator of the motor as described above, however, the remainder of the electrical steel sheet 30, after the stator sheet 30' is obtained by stamping, i.e., a scrap 30", is very large, as shown in FIG. 2A. Consequently, a large portion of the electrical steel sheet 30 is wasted, and therefore, the manufacturing costs of the stator are increased.

Also, the electrical steel sheet 30 used to manufacture the conventional stator is a non-oriented steel sheet. As a result, core loss is large, and therefore, efficiency of the motor is limited.

Furthermore, a coil-winding operation is performed only after the yokes 12 are prepared in the shape of a ring according to the conventional method of manufacturing the stator of the motor. As a result, the slot 14, which is a coil-winding space, is very small, and therefore, the coil-winding operation is not easily and conveniently performed. In addition, the diameter of the coil 18 is limited. As a result, copper loss is large, and therefore, efficiency of the motor is limited.

### SUMMARY OF THE INVENTION

Therefore, the present invention has been made in view of the above problems, and it is an object of the present invention to provide a stator of a motor that is capable of being easily manufactured, thereby reducing the manufacturing costs of the stator and improving efficiency of the motor.

It is another object of the present invention to provide a method of manufacturing the same.

In accordance with one aspect of the present invention, the above and other objects can be accomplished by the provision of a stator of a motor, the stator comprising: a core assembly having a plurality of unit cores connected to each other in a shape of a ring; and coils wound on the core assembly, wherein each of the unit cores is composed of a plurality of core sheets stacked in the direction where the thickness of each of the unit cores is increased, each of the core sheets comprising: a curved yoke part corresponding to any one of a plurality of divided parts of the ring-shaped core assembly divided in the circumferential direction of the core assembly; and at least one pole part bent from the yoke part such that the coils are wound on the pole part.

Preferably, the yoke part is formed in the shape of a circular arc.

Preferably, the at least one pole part is bent from one end of the yoke part or either end of the yoke part.

Preferably, the at least one pole part is perpendicular to the yoke part.

Preferably, each of the core sheets is made of an oriented electrical steel sheet.

In accordance with another aspect of the present invention, there is provided a stator of a motor, the stator comprising: a core assembly having a plurality of unit cores connected to each other in a shape of a ring; and coils wound on the core assembly, wherein each of the unit cores is composed of a plurality of core sheets stacked in the direction where the thickness of each of the unit cores is increased, each of the core sheets comprising: a curved yoke part corresponding to any one of a plurality of divided parts of the ring-shaped core assembly divided in the circumferential direction of the core assembly; and at least one pole part bent from the yoke part such that the coils are wound on the pole part, the at least one pole part is bent from either end of the yoke part in the same direction such that at least one pole part of one of the unit cores comes into contact with at least one pole part of another adjacent unit core, and the coils are wound on the opposite unit poles of the connected unit cores.

Preferably, the yoke part is formed in the shape of a circular arc.

Preferably, the at least one pole part is perpendicular to the yoke part.

Preferably, each of the core sheets is made of an oriented electrical steel sheet.

In accordance with another aspect of the present invention, there is provided a method of manufacturing a stator of a motor, comprising: a first step of bending at least one end of an electrical steel sheet to prepare a core sheet comprising a yoke part and at least one pole part bent from the yoke part; a second step of stacking a plurality of core sheets to prepare a unit core having a predetermined thickness; a third step of arranging a plurality of unit cores in line, such that the yoke parts are connected to each other, to prepare a core band; a fourth step of winding coils on the pole parts after the core band is prepared; and a fifth step of connecting both ends of the core band to complete the stator.

Preferably, the at least one end of the electrical steel sheet is bent at the first step such that the at least one pole part is perpendicular to the yoke part.

Preferably, both ends of the electrical steel sheet are bent in the same direction at the first step.

Preferably, the fifth step comprises: a sub-step of bending the yoke part (52') in a predetermined curvature by a press.

Preferably, the electrical steel sheet is made of an oriented material.

Preferably, the core sheets of the unit cores are prepared with predetermined sizes such that the ends of the core sheets are placed on the same line after the stator is completed.

In accordance with yet another aspect of the present invention, there is provided a method of manufacturing a stator of a motor, comprising: a first step of bending both ends of an electrical steel sheet in the same direction to prepare a core sheet comprising a yoke part and two pole parts bent from the yoke part; a second step of stacking a plurality of core sheets to prepare a unit core having a predetermined thickness; a third step of arranging a plurality of unit cores in line, such that the pole parts of one unit core come into contact with the pole parts of another unit core, to prepare a core band; a fourth step of winding coils on the opposite pole parts of the connected unit cores after the core band is prepared; a fifth step of bending the yoke parts in a predetermined curvature by a press after the coils are wound on the core band; and a sixth step of connecting both ends of the core band to complete the stator.

Preferably, the ends of the electrical steel sheet are bent at the first step such that the pole parts are perpendicular to the yoke part.

Preferably, the core sheets of the unit cores are prepared with predetermined sizes such that the ends of the core sheets are placed on the same line after the stator is completed.

Preferably, the electrical steel sheet is made of an oriented material.

According to the present invention, an electrical steel sheet is bent to prepare a core sheet, and a plurality of core sheets are stacked to prepare a unit core having a predetermined thickness. Consequently, no scrap is formed from the electrical steel sheet, and therefore, the present invention has the effect of reducing the manufacturing costs of the stator of the motor.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a schematic view illustrating the structure of a stator of a conventional motor;
FIG. 2 is a perspective view illustrating a process of manufacturing the stator of the conventional motor shown in FIG. 1;
FIG. 3 is a schematic view illustrating the structure of a stator of a motor according to a preferred embodiment of the present invention;
FIG. 4 is a perspective view illustrating a unit core constituting the stator of the motor according to the preferred embodiment of the present invention shown in FIG. 3;
FIG. 5 is a perspective view illustrating a core assembly of the stator of the motor according to the preferred embodiment of the present invention shown in FIG. 3;
FIG. 6 is a perspective view illustrating a process of manufacturing the stator of the motor according to the preferred embodiment of the present invention shown in FIG. 3; and
FIG. 7 is a perspective view illustrating a core assembly of a stator of a motor according to another preferred embodiment of the present invention.

### DESCRIPTION OF THE PREFERRED EMBODIMENTS

Now, preferred embodiments of the present invention will be described in detail with reference to the accompanying drawings.

It should be understood that stators of motors and methods of manufacturing the same according to numerous preferred embodiments of the present invention may be proposed, although only the most preferred embodiments of the present invention will be described hereinafter. It should also be understood that a detailed description will not be given of the stator of the motor and the method of manufacturing the same according to the present invention identical in construction and operation to the conventional stator of the motor and the conventional method of manufacturing the same.

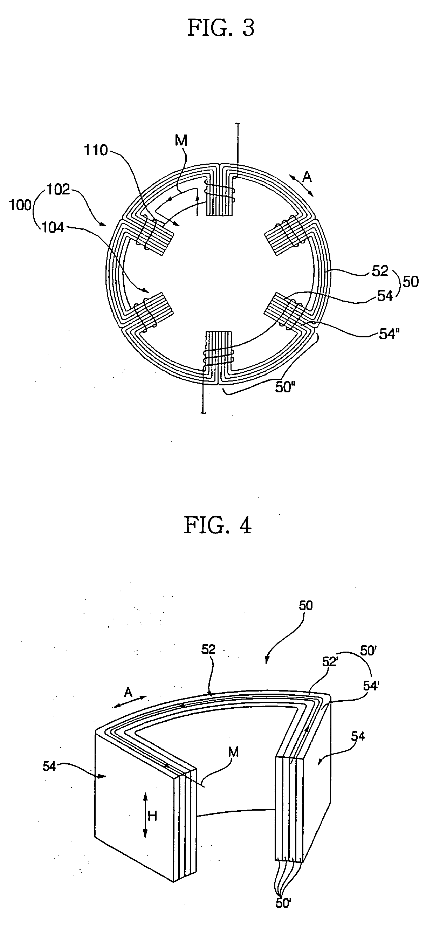

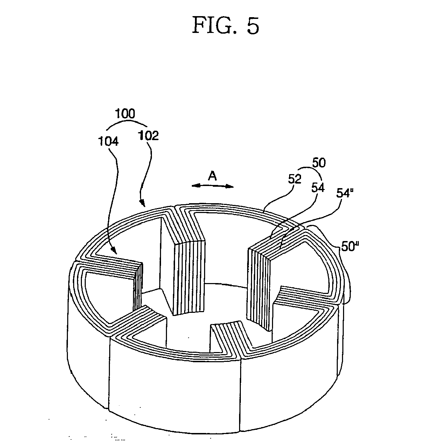

FIG. 3 is a schematic view illustrating the structure of a stator of a motor according to a preferred embodiment of the present invention, FIG. 4 is a perspective view illustrating a unit core constituting the stator of the motor according to the preferred embodiment of the present invention shown in FIG. 3, and FIG. 5 is a perspective view illustrating a core assembly of the stator of the motor according to the preferred embodiment of the present invention shown in FIG. 3.

As shown in FIGS. 3 to 5, the stator of the motor according to the present invention comprises: a core assembly 100 having a ring-shaped yoke 102 and a plurality of poles 104, which are uniformly spaced apart from each other in the circumferential direction of the yoke and protruded inwardly in the radial direction of the yoke 103; and coils 110 wound on the poles of the core assembly 100.

The core assembly 100 comprises a plurality of unit cores 50 connected to each other in the shape of a ring.

Each of the unit cores 50 is obtained from a core sheet 50', which is made of an electrical steel sheet. More preferably, each of the unit cores 50 is obtained from a plurality of core sheets 50' stacked in the direction where the thickness of each of the unit cores 50 is increased. If each of the unit cores 50 is prepared as described above, eddy current loss of the core assembly 100 is minimized.

The thickness of each of the unit cores 50 is limited to fulfill several necessary conditions. Consequently, it is necessary to manufacture each of the core sheets 50' very thinly. Preferably, a plurality of core sheets 50', constituting each of the unit cores 50, are prepared with predetermined sizes such that the ends of the core sheets 50' are placed on the same line.

Each of the core sheets 50' comprises: a curved yoke part 52' corresponding to any one of divided parts of the ring-shaped yoke 102, which are divided in the circumferential direction (indicated by arrow A) of the ring-shaped yoke 102 of the core assembly 100; and at least one pole part 54' bent inward from at least one end of the yoke part 52' toward the center of a circle drawn by the arc-shaped yoke part 52'.

Each of the core sheets 50' may have a pair of pole parts 54', which are bent inward from both ends of the yoke part 52' toward the center of a circle drawn by the arc-shaped yoke part 52'. Preferably, the pole parts 54' bent from the ends of the yoke part 52' of each of the core sheets 50' have the same length. When the yoke 102 of the core assembly 100 is formed in the shape of a circular ring, the yoke part 52' of each of the core sheets 50' is formed in the shape of a circular arc.

Each of the unit cores 50, which is obtained from the core sheets 50' with the above-stated construction, comprises: a unit yoke 52 consisting of the yoke parts 52' of the core sheets 50'; and a pair of unit poles 54 consisting of the pole parts 54' of the core sheets 50', the coils 110 being wound on the unit poles 54.

When one unit core 50 is connected to another unit core 50" adjacent to the unit core 50, the unit pole 54 of the unit core 50 comes into contact with the unit pole 54" of the adjacent unit core 50" in the circumferential direction of the core assembly 100. In this way, the core assembly 100 is obtained. The coils 110 are wound on the opposite unit poles 54 and 54" of the connected unit cores 50 and 50".

A silicon steel sheet is usually used as the electrical steel sheet, of which each of the core sheets 50' is made. Preferably, the silicon steel sheet is oriented such that easy magnetization is accomplished either from the unit yoke 52 of the unit core 50 to the unit pole 54 of the unit core 50 or from the unit pole 54 of the unit core 50 to the unit yoke 52 of the unit core 50 (i.e., in the direction indicated by arrow M) while magnetization is not accomplished along the height of the core assembly 100 (i.e., in the direction indicated by arrow H).

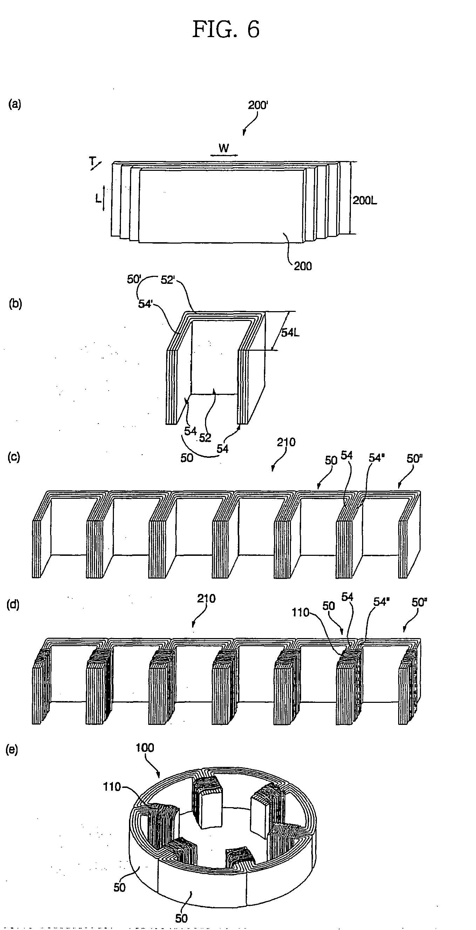

A process of manufacturing the stator of the motor with the above-stated construction according to the present invention will now be described with reference to FIG. 6.

First, a thin sheet-shaped electrical steel is cut in the shape of rectangles having predetermined sizes to obtain a plurality of different electrical steel sheets 200, as shown in FIG. 6A.

At this time, the electrical steel sheets 200 have the same vertical length, which corresponds to the height of the core assembly 100, and different horizontal lengths. The electrical steel sheets 200 may be oriented. In this case, magnetic characteristics are poor in the vertical direction (indicated by arrow L) and good in the horizontal direction (indicated by arrow W).

Next, the electrical steel sheets 200 are stacked to prepare an electrical steel sheet assembly 200' having a predetermined thickness. At this time, the lengths of the electrical steel sheets 200 are gradually increased or decreased in the direction where the electrical steel sheets 200 are stacked to prepare the electrical steel sheet assembly 200' (indicated by arrow T).

After the electrical steel sheet assembly 200' is prepared, as shown in FIG. 6B, the electrical steel sheet assembly 200' is bent in the shape of a "[" such that both ends of the electrical steel sheet assembly 200' extends in the same direction. As a result, a unit core 50, which comprises core sheets 50' each having a yoke part 52' and a pair of pole parts 54', is prepared. In other words, the unit core 50 comprises a unit yoke 52 and a pair of unit poles 54.

In each of the core sheets 50' of the unit core 50 constructed as described above, the yoke part 52' is formed in the shape of a rectangle, the pole parts 54' are perpendicular to the yoke part 52', and the length 54L of one of the pole parts 54' is equal to that of the other pole part 54'. The ends of the core sheets 50' constituting the unit core 50 are placed on the same line, and therefore, the ends of the unit core 50 are even.

Subsequently, a plurality of unit cores 50 are arranged in line to prepare a core band 210 in which one unit core 50 is connected with another unit core 50" while the unit pole 54 of the unit core 50 is in contact with a unit pole 54" of the unit core 50", as shown in FIG. 6C.

After the core band 210 is prepared, a coil-winding operation is performed such that the coils 110 are wound on the opposite unit poles 54 and 54" of the connected unit cores 50 and 50", as shown in FIG. 6D.

In the illustrated embodiment of the present invention, the unit yoke 52 of the unit core 50 is formed in the shape of a flat rectangle, and the unit poles 54 of the unit core 50 are perpendicular to the unit yoke 52 of the unit core 50, and as a result, a coil-winding space is increased as compared to the conventional stator. Consequently, the coil-winding operation according to the present invention is more easily performed as compared to the conventional coil-winding operation performed after the core assembly is prepared in the shape of a ring as shown in FIGS. 2C and 2D.

The coil-winding operation may be performed in another way. For example, the coils 110 may be wound on bobbins each formed such that each of the bobbins can be fitted on the opposite unit poles of the connected unit cores of the core band 210, and the bobbins having coils wound thereon may be fitted on the opposite unit poles of the connected unit cores of the core band 210.

After the coil-winding operation is completed as described above, the unit yokes 52 of the unit cores 50 are bent in the shape of a circular arc by means of a press such that both ends of the core band 210 are connected to each other. Consequently, a stator having the core assembly 100 comprising unit cores 50 and the coils 10 is finally obtained, as shown in FIG. 6E.

As apparent from the above description, electrical steel sheets 200 are bent to prepare core sheets 50' each comprising a yoke part 52' and pole parts 54', the core sheets 50' are stacked to prepare a unit core 50 having a predetermined thickness, a plurality of unit cores 50 are arranged in line to prepare a core band 210, coils are wound on the core band 210, and both ends of the core band 210 is connected to each other. In this way, a stator is manufactured while no scrap is formed from the electrical steel sheet 200. Consequently, the present invention has the effect of reducing the manufacturing costs of the stator of the motor.

Also, oriented electrical steel sheet 200 is used in accordance with the present invention, and as a result, core loss is minimized. Consequently, the present invention has the effect of improving efficiency of the motor.

Also, the unit yoke 52 of the unit core 50 is formed in the shape of a flat rectangle, and the unit poles 54 of the unit core 50 are perpendicular to the unit yoke 52 of the unit core 50, and as a result, a coil-winding space is relatively large. Consequently, the present invention has the effect of providing an easy coil-winding operation, and therefore, improving productivity of the stator. In addition, coils each having a relatively large diameter can be wound as compared to the conventional stators. Consequently, the present invention has the effect of improving efficiency of the motor.

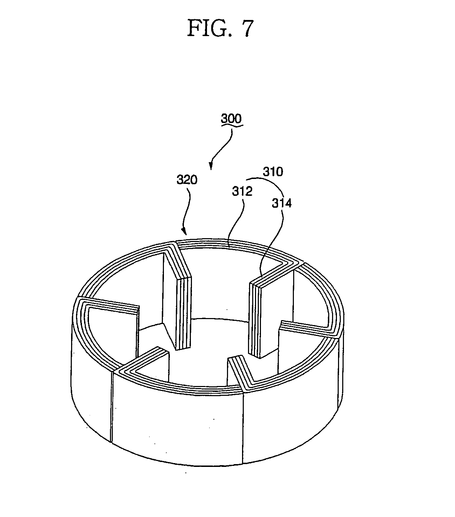

FIG. 7 is a perspective view illustrating a core assembly of a stator of a motor according to another preferred embodiment of the present invention. The stator according to this embodiment is identical in technical concept, construction and effect to the core assembly 100 according to the previously described embodiment shown in FIGS. 3 to 6. Accordingly, a detailed description and drawings of the core assembly 300 according to this embodiment will not be given.

The stator according to the illustrated embodiment as shown in FIG. 7 is manufactured as follows:

First, an electrical steel sheet is bent, such that one part of the electrical steel sheet is perpendicular to the other part of the electrical steel sheet, to prepare a core sheet 310. Next, a plurality of core sheets 310 prepared as described above are stacked to prepare a unit core 320 having a predetermined thickness. After that, a plurality of unit cores 320 are arranged in line to prepare a core band, and coils (not shown) are wound on the core band. Finally, both ends of the core band are connected to each other. In this way, a stator having a ring-shaped core assembly 300 is obtained.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A stator of a motor, the stator comprising:
a core assembly (100) having a plurality of unit cores (50) connected to each other in a shape of a ring; and
coils (110) wound on the core assembly (100), wherein
each of the unit cores (50) is composed of a plurality of core sheets (50') stacked in the direction where the thickness of each of the unit cores (50) is increased, each of the core sheets (50') comprising:
a curved yoke part (52') corresponding to any one of a plurality of divided parts of the ring-shaped core assembly (100) divided in the circumferential direction of the core assembly (100); and
at least one pole part (54') bent from the yoke part (52') such that the coils (110) are wound on the pole part (54').

2. The stator as set forth in claim 1, wherein the yoke part (52') is formed in the shape of a circular arc.

3. The stator as set forth in claim 1, wherein the at least one pole part (54') is bent from one end of the yoke part (52').

4. The stator as set forth in claim 1, wherein the at least one pole part (54') is bent from either end of the yoke part (52').

5. The stator as set forth in claim 1, wherein each of the core sheets (50') is made of an oriented electrical steel sheet (200).

6. A method of manufacturing a stator of a motor, comprising:
a first step of bending at least one end of an electrical steel sheet (200) to prepare a core sheet (50') comprising a yoke part (52') and at least one pole part (54') bent from the yoke part (52');
a second step of stacking a plurality of core sheets (50') to prepare a unit core (50) having a predetermined thickness;
a third step of arranging a plurality of unit cores (50) in line, such that the yoke parts (52') are connected to each other, to prepare a core band (210);
a fourth step of winding coils (110) on the pole parts (54') after the core band (210) is prepared; and
a fifth step of connecting both ends of the core band (210) to complete the stator.

7. The method as set forth in claim 6, wherein the at least one end of an electrical steel sheet (200) is bent at the first step such that the at least one pole part (54') is perpendicular to the yoke part (52').

8. The method as set forth in claim 6, wherein the fifth step comprises:
a sub-step of bending the yoke part (52') in a predetermined curvature by a press.

9. The method as set forth in claim 6, wherein the electrical steel sheet (200) is made of an oriented material.

10. The method as set forth in claim 6, wherein the core sheets (50') of the unit cores (50) are prepared with predetermined sizes such that the ends of the core sheets (50') are placed on the same line after the stator is completed.
